# EUROPEAN PATENT APPLICATION

(11) **EP 4 734 272 A1**
(43) Date of publication of application: **29.04.2026**
(21) Application number: 24863068.3
(22) Date of filing: 19.08.2024
(51) Int. Cl.: H01M 50/552, H01M 50/148, H01M 50/169, H01M 50/505, H01M 50/521, H01M 50/553, H01M 50/562, H01M 50/564, H01M 50/116

(54) **SECONDARY BATTERY, METHOD FOR MANUFACTURING SAME, AND BATTERY PACK**

(30) Priority: 05.09.2023 KR 20230117851; 31.05.2024 KR 20240071802
(71) Applicant: LG Energy Solution, Ltd., Seoul 07335 (KR)
(72) Inventor: LEE, Ji Sun, Daejeon 34122 (KR); KIM, Sang Hun, Daejeon 34122 (KR); LEE, Jae Ho, Daejeon 34122 (KR); CHOI, Ji Eun, Daejeon 34122 (KR)
(74) Representative: Goddar, Heinz J.
(86) International application number: PCT/KR2024/012290
(87) International publication number: WO 2025/053487

(57) **Abstract**

Provided is a secondary battery in which battery capacity is improved while having relatively few restriction in shape, an amount of moisture introduced from the outside is reduced, and structural stability is improved. A secondary battery according to the present invention include an electrode assembly, an exterior film configured to surround a portion of the electrode assembly, and a cap configured to cover a remaining portion of the electrode assembly. The cap includes a connection part coupled to the exterior film, and a terminal part coupled to the connection part, exposed to each of the inside and outside of the connection part, and electrically connected to the electrode assembly at a portion thereof, which is exposed to the inside of the connection part. At least a portion of the terminal part is embedded into the connection part.

## Description

### THCHNICAL FIELD

### CROSS-REFERENCE TO RELATED APPLICATIONS

This application claims the priority of Korean Patent Application No. 10-2023-0117851 filed on September 5, 2023 and No. 10-2024-0071802 filed on May 31, 2024, in the Korean Intellectual Property Office, the disclosure of which is incorporated herein by reference.

### THCHNICAL FIELD

The present invention relates to a secondary battery, and more particularly, to a secondary battery that is chargeable and dischargeable, a method for preparing the same, and a battery pack.

### BACKGROUND ART

In recent years, the price of energy sources increases due to the depletion of fossil fuels, the interest in environmental pollution is amplified, and the demand for eco-friendly alternative energy sources is becoming an indispensable factor for future life. Accordingly, studies on various power generation technologies such as solar power, wind power, and tidal power are continuing, and power storage devices such as batteries for more efficiently using the generated electrical energy are also of great interest.

Furthermore, as technology development and demand for electronic mobile devices and electric vehicles using batteries increase, the demands for batteries as energy sources are rapidly increasing. Thus, many studies on batteries which are capable of meeting various demands have been conducted.

Batteries storing electrical energy may be generally classified into primary batteries and a secondary batteries. Such a primary battery is a disposable consumable battery. On the other hand, such a secondary battery is a chargeable battery that is manufactured by using a material in which oxidation and reduction processes between current and the material are capable of being repeated. That is, when the reduction reaction to the material is performed by the current, power is charged. When the oxidation reaction to the material is performed by the current, power is discharged. Such charging-discharging are repeatedly performed to generate electricity.

Secondary batteries may be classified into cylindrical cells, pouch cells, and prismatic cells according to their shape. Among them, such a pouch cell may be manufactured by accommodating an electrode assembly in the form of a stack of a positive electrode, a negative electrode, a separator, etc. inside a pouch and then sealing an outer portion of the pouch.

Secondary batteries may be classified into cylindrical cells, pouch cells, and prismatic cells according to their shape. Among them, such a pouch cell may be manufactured by accommodating an electrode assembly in the form of a stack of a positive electrode, a negative electrode, a separator, etc. inside a pouch and then sealing an outer portion of the pouch.

The pouch cell according to the related art may have a limitation of cracks occurring in a pouch film in a process of molding the pouch film, and may pouch films are discarded after a degassing process. In addition, a moldable depth is limited depending on material characteristics of the pouch film, and thus there is a limit to increase in battery capacity.

Thus, there is a need for a type of secondary battery that is capable of improving the battery capacity while having relatively few restriction in shape.

### DISCLOSURE OF THE INVENTION

### TECHNICAL PROBLEM

An aspect of the present invention provides a secondary battery in which battery capacity is improved while having relatively few restriction in shape, an amount of moisture introduced from the outside is reduced, and structural stability is improved.

### TECHNICAL SOLUTION

According to an aspect of the present invention, there is provided a secondary battery including: an electrode assembly; an exterior film configured to surround a portion of the electrode assembly; and a cap configured to cover a remaining portion of the electrode assembly, wherein the cap includes: a connection part coupled to the exterior film; and a terminal part coupled to the connection part, exposed to each of the inside and outside of the connection part, and electrically connected to the electrode assembly at a portion thereof, which is exposed to the inside of the connection part, wherein at least a portion of the terminal part is embedded into the connection part.

The terminal part may include: a first member exposed to the outside of the connection part; and a second member extending from the first member toward the electrode assembly.

The second member may be provided so that one end toward the electrode assembly is exposed to the inside of the connection part.

The second member may be provided in plurality, and at least one second member may be provided so that one end toward the electrode assembly is exposed to the inside of the connection part.

The secondary battery may further include a busbar disposed between the terminal part and the electrode assembly to connect one end of the second member, which is exposed to the inside of the connection part, to the electrode assembly.

The second member may extend from a side portion of the first member toward the electrode assembly and be embedded into the connection part so as to be covered by the connection part, and the terminal part may further include a third member extending from the first member toward the electrode assembly and provided to pass through the connection part so as to be exposed to the inside of the connection part.

The secondary battery may further include a busbar disposed between the terminal part and the electrode assembly to connect the third member, which is exposed to the inside of the connection part, to the electrode assembly.

The busbar may include: a first metal part that is in contact with the third member; and a second metal part which extends from the first metal part toward the electrode assembly and of which one end is connected to the electrode assembly.

The busbar may include: a first metal part that is in contact with the third member; a second metal part extending from the first metal part toward the electrode assembly; a third metal part extending from the second metal part toward the exterior film; and a fourth metal part which extends from the third metal part toward the electrode assembly and of which one end is connected to the electrode assembly.

The third member may include a metal material, and the third member and the busbar may be coupled to each other by welding.

The terminal part may be disposed to protrude in a direction, which is away from the electrode assembly, from one surface of the connection part.

In the cap, one surface of the connection part may be disposed on the same surface as one surface of the terminal part.

The terminal part may include a metal material, the connection part may include a resin material having adhesive properties by heat, and the terminal part and the connection part may be coupled to each other by heat and a pressure.

In the secondary battery, the connection part and the terminal part may be coupled to each other by an adhesive applied between the connection part and the terminal part.

The connection part may include a metal material, and the exterior film may include a metal layer coupled to the connection part by welding.

The exterior film may include a sealant layer having adhesive properties by heat and a barrier layer comprising a metal, wherein the barrier layer may include one or more materials selected from the group consisting of iron (Fe), carbon (C), chromium (Cr), manganese (Mn), nickel (Ni), aluminum (Al), stainless steel (STS), and an alloy thereof. The connection part may include a resin material having adhesive properties by heat, and the exterior film may include a resin layer coupled to the connection part by heat and a pressure.

In the secondary battery, the exterior film and the connection part may be coupled to each other by an adhesive applied between the exterior film and the connection part.

The exterior film may include a bendable film.

The exterior film may include a bendable film having no elasticity.

According to another aspect of the present invention, there is provided a method for preparing a secondary battery, the method including: providing an electrode assembly including a positive electrode and a negative electrode; allowing an exterior film to surround a portion of the electrode assembly; and allowing a cap to cover a remaining portion of the electrode assembly, wherein the cap includes: a connection part coupled to the exterior film; and a terminal part coupled to the connection part, exposed to each of the inside and outside of the connection part, and electrically connected to the electrode assembly at a portion of the inside of the connection part, wherein at least a portion of the terminal part is embedded into the connection part.

According to another aspect of the present invention, there is provided a battery pack including: the secondary battery of mentioned above, which is provided in plurality; and a packaging configured to accommodate the plurality of secondary batteries.

### ADVANTAGEOUS EFFECTS

In the secondary battery according to the embodiment of the present invention, since there is no process of molding the exterior film, there may be few restriction on the form in which the exterior film accommodates the electrode assembly, and the possibility of the defects such as the cracks in the exterior film may be reduced to improve the battery capacity.

In addition, the degree of permeation of moisture from the outside of the secondary battery into the secondary battery may be reduced to improve the safety of the secondary battery.

In addition, the terminal part may be electrically connected to the electrode assembly in the various forms by the busbar.

In addition, the structural stability of the secondary battery may be improved by the coupling relationship and arrangement of the terminal part and the connection part.

In addition, since at least a portion of the terminal part is disposed embedded in the connection part, the structural stability of the cap may be improved.

The effects of the prevent invention are not limited by the aforementioned description, and thus, more varied effects are involved in this specification.

### BRIEF DESCRIPTION OF THE DRAWINGS

FIG. 1 is a schematic perspective view of a secondary battery according to Embodiment 1 of the present invention;
FIG. 2 is a schematic exploded perspective view of the secondary battery according to Embodiment 1 of the present invention;
FIG. 3 is a schematic cross-sectional view illustrating a cap of the secondary battery, taken along line A-A' of FIG. 2 according to Embodiment 1 of the present invention;
FIG. 4 is a schematic cross-sectional view illustrating a modified example of the cap of FIG. 3;
FIG. 5 is a schematic cross-sectional view illustrating a cap and a busbar of a secondary battery according to Embodiment 2 of the present invention;
FIG. 6 is a schematic cross-sectional view illustrating a modified example of the cap of FIG. 5; and
FIG. 7 is a schematic exploded perspective view of a battery pack according to Embodiment 3 of the present invention.

### MODE FOR CARRYING OUT THE INVENTION

Hereinafter, preferred embodiments of the present invention will be described in detail with reference to the accompanying drawings so that those of ordinary skill in the art may easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

### Embodiment 1

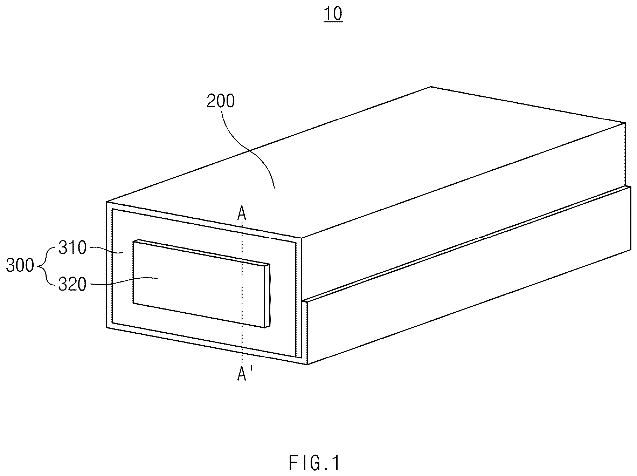

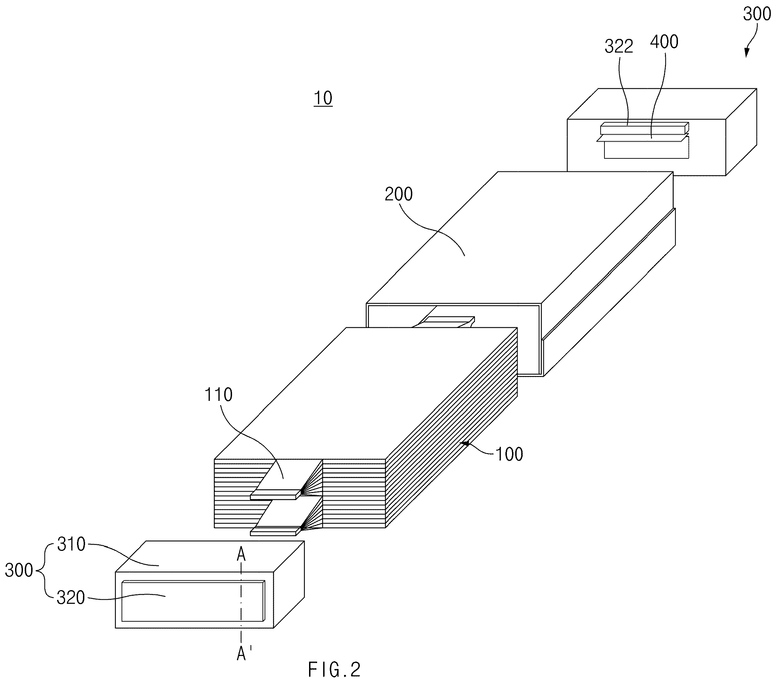

FIG. 1 is a schematic perspective view of a secondary battery 10 according to Embodiment 1 of the present invention, and FIG. 2 is a schematic exploded perspective view of the secondary battery 10 according to Embodiment 1 of the present invention.

The secondary battery 10 according to Embodiment 1 of the present invention may include an electrode assembly 100, an exterior film 200, and a cap 300. Hereinafter, each configuration of the secondary battery 10 will be described in more detail. For reference, contents of Embodiment 1 may be equally applied to embodiments described later, as long as there is no conflict.

The electrode assembly 100 of the secondary battery 10 may include a positive electrode, a negative electrode, and a separator. Here, the separator may be disposed between the positive electrode and the negative electrode to physically separate the positive electrode from the negative electrode. The electrode assembly 100 may be provided in a form in which the positive electrode, the negative electrode, and the separator are stacked, or a jelly-roll form in which the positive electrode, a negative electrode, and a separator are wound.

The electrode assembly 100 may include an electrode tab 110 connected to the electrode. The electrode tab 110 may be provided separately or may be provided as a portion of a current collector constituting the electrode. For reference, if the electrode assembly 100 is an all-solid-state battery, a solid electrolyte may be provided instead of the separator.

Referring to FIG. 2, the secondary battery 10 according to Embodiment 1 of the present invention may include an exterior film 200. The exterior film 200 of the secondary battery 10 may be provided to surround a portion of the electrode assembly 100. Specifically, the exterior film 200 may be provided to surround a cap 300, which will be described later, and the electrode assembly 100. More specifically, the exterior film 200 may be coupled to the cap 300 to define an internal space, and the electrode assembly 100 may be accommodated in the internal space.

In order to surround the electrode assembly 100, the exterior film 200 may be made of a material of which a shape is deformable. For example, the exterior film 200 may be bendable.

In addition, the exterior film 200 may be made of a non-elastic material. In the related art, a pouch film is molded to define a space in which the electrode assembly is accommodated. However, since the exterior film 200 does not need to deform its shape through the molding, the exterior film 200 may be made of a non-elastic material. That is, the exterior film 200 may not have elasticity.

The exterior film 200 of the secondary battery 10 may have a shape in which a sheet or film is rolled along a side surface of the electrode assembly 100. That is, the exterior film 200 may be disposed to surround a side portion of the electrode assembly 100. Here, one end and the other end of the exterior film 200 may be disposed to meet each other and surround the electrode assembly 100. In relation to the form in which the one end and the other end of the exterior film 200 meet each other, it is possible to couple one surface of the one end to the other surface of the other end so that the one surface and the other surface are in contact with each other (see FIG. 2), and it is possible to couple one surface of one end to one surface of the other end so that the one surface and the one surface are in contact with each other. This is only an example, and the form in which one end and the other end of the exterior film 200 are coupled to define a space for accommodating the electrode assembly 100 may vary.

Regarding the method by which one end and the other end of the exterior film 200 are coupled to each other, one end and the other end of the exterior film 200 may be coupled to each other by sealing by heat or sealing by heat and a pressure. That is, the exterior film 200 may include a material that has sealing properties by heat. Specifically, the exterior film 200 may include a material that is melted by the heat and has adhesive properties.

For example, the exterior film 200 may include a sealant layer, a barrier layer, and an insulating layer.

The sealant layer may include at least one or more materials selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, teflon, and glass fiber. Mainly, a polyolefin-based resin such as polypropylene (PP) or polyethylene (PE) may be used. Particularly, polypropylene (PP) may have excellent mechanical properties such as tensile strength, rigidity, surface hardness, wear resistance, and heat resistance, and chemical properties such as corrosion resistance. The barrier layer may include one or more materials selected from the group consisting of iron (Fe), carbon (C), chromium (Cr), manganese (Mn), nickel (Ni), aluminum (Al), stainless steel (STS), and an alloy thereof.

The insulating layer may include at least one or more materials selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, teflon, and glass fiber.

The exterior film 200 may be disposed to surround a portion of the electrode assembly 100, and the cap 300 may be disposed to surround a remaining portion of the electrode assembly 100. Specifically, when the exterior film 200 is disposed to surround the electrode assembly 100 along the side surface of the electrode assembly 100, an exterior opening may be defined at each of both ends of the electrode assembly 100. The cap 300 of the secondary battery 10 may be coupled to the exterior film 200 in a form that covers the exterior opening at each of both the ends of the electrode assembly 100, and the electrode assembly 100 may be accommodated in the internal space defined by the exterior film 200 and the cap 300.

As an example of a method for coupling the cap 300 to the exterior film 200, the cap 300 and the exterior film 200 may be coupled to each other by welding. Specifically, the connection part 310 may include a metal material, and the exterior film 200 may include a metal layer, which is capable of being coupled to the connection part 310 by welding, at a portion facing the connection part 310.

As another example of a method of coupling the cap 300 to the exterior film 200, the cap 300 and the exterior film 200 may be coupled to each other by sealing. Specifically, the connection part 310 may include a resin material that has adhesive properties by heat, and the exterior film 200 may include a resin layer, which is capable of being coupled to the connection part 310 by heat and a pressure, at a portion facing the connection part 310. Here, the resin layer may include a material having sealing properties by heat as described above.

In the pouch cell according to the related art, a cup part that accommodates the electrode assembly 100 may be molded by molding a sheet or film. During the molding process of the cup part, a moldable depth may be limited depending on the material characteristics of the sheet or film, and the capacity at which the electrode assembly 100 is accommodated may also be limited. In addition, when molding the sheet or film, a thickness at a corner is the thinnest, which often resulted in defects such as cracks. In addition, the pouch cell according to the related art may require a gas collection part to collect a gas during the degassing process so as to remove the gas accumulated inside the pouch, and a large portion of the gas collection part may be removed and discarded after the degassing process.

On the other hand, in the secondary battery 10 according to Embodiment 1 of the present invention, the exterior film 200 may be used to match a volume of the electrode assembly 100, and thus, a limit to the capacity at which the electrode assembly 10 is accommodated may not occur. In addition, since there is no need for molding the cup part, it is possible to prevent defects such as cracks from occurring in the exterior film 200, and the material and thickness of the exterior film 200 may be relatively freely selected. In addition, since the electrolyte injection and the degassing process are carried out through the cap 300, economic efficiency of the process may be improved because the exterior film 200 is not generated to be discarded.

Although not described in detail in the present invention, the cap 300 may further include an electrolyte injection port for injecting an electrolyte or a gas discharge port for discharging the gas in the degassing process.

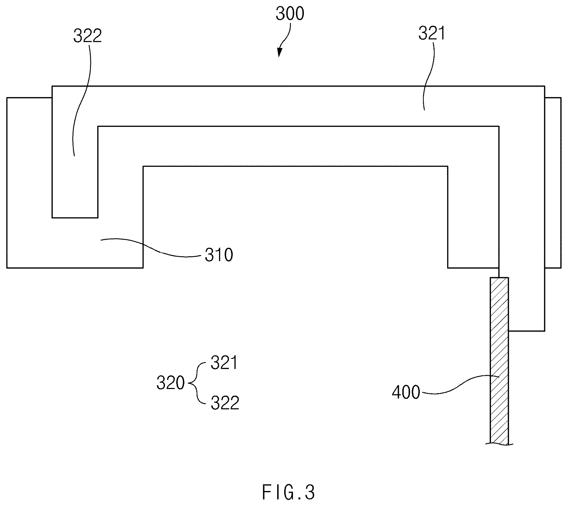

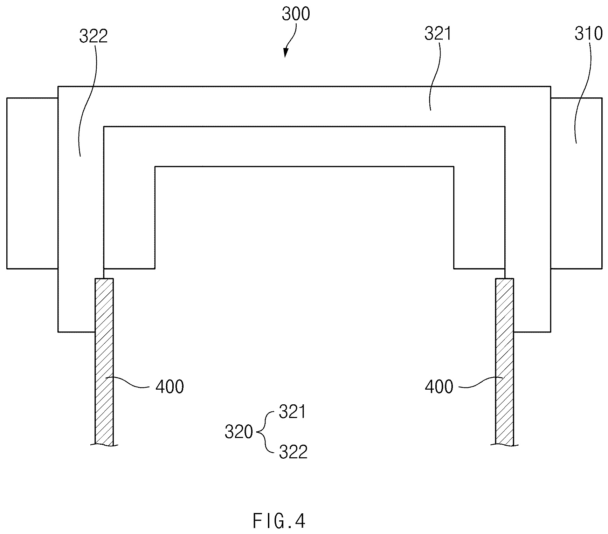

FIG. 3 is a schematic cross-sectional view of the secondary battery 10, taken along line A-A' of FIG. 2 according to Embodiment 1 of the present invention, and FIG. 4 is a schematic cross-sectional view illustrating a modified example of the cap 300 of FIG. 3.

Referring to FIG. 3, the cap 300 of the secondary battery 10 according to Embodiment 1 of the present invention may include the connection part 310 and a terminal part 320.

The connection part 310 of the cap 300 may be coupled to the exterior film 200. In addition, the terminal part 320 of the cap 300 may be coupled to the connection part 310 and may be exposed to the outside and inside of the connection part 310. Here, the inside of the connection part 310 may refer to a portion of the internal space defined by the cap 300 and the exterior film 200, and the outside of the connection part 310 may refer to an external space of the cap 300 and the exterior film 200. A portion of the terminal part 320 exposed to the inside of the connection part 310 may be electrically connected to the electrode assembly 100. Here, the electrical connection may include both direct connection between the terminal part 320 and the electrode assembly 100 and indirect connection through another electrically conductive member.

As an example of the method for coupling the connection part 310 to the terminal part 320, coupling by sealing may be possible. The terminal part 320 may include a metal material, and the connection part 310 may include a resin material that has adhesive properties by heat. Thus, the resin material of the adhesive connection part 310 may be melted by heat and coupled to the terminal part 320 by a pressure.

As an example of a configuration to improve structural stability of the cap 300, at least a portion of the terminal part 320 of the cap 300 according to Embodiment 1 of the present invention may be embedded in the connection part 310. In this regard, the terminal part 320 of the cap 300 may include a first member 321 and a second member 322.

A portion of the first member 321 of the terminal part 320 may be exposed to the outside of the connection part 310. Thus, the terminal part 320 electrically connected to the electrode assembly 100 may be in electrical contact with the outside through the first member 321 exposed to the outside of the connection part 310. That is, the secondary battery 10 may provide electrical energy to the outside through the first member 321.

The second member 322 of the terminal part 320 may extend toward the electrode assembly 100. That is, the second member 322 may extend from the first member 321 toward the electrode assembly 100. Specifically, the second member 322 may be provided so that one end toward the electrode assembly 100 is exposed to the inside of the connection part 310. Here, the inside of the connection part 310 may refer to a portion of the internal space defined by the exterior film 200 and the cap 300.

Referring to FIG. 3, the second member 322 of the terminal part 320 may be provided in plurality. In addition, at least one second member 322 may be provided so that one end toward the electrode assembly 100 is exposed to the inside of the connection part 310. Specifically, in the plurality of second members 322 extending from the first member 321 toward the electrode assembly 100, some of the second members 322 may be embedded in the connection part 310, and some of the second members 322 may be exposed to the inside of the connection part 310. Based on FIG. 3, the second member 322 illustrated at the left may be in a state of being embedded in the connection part 310, and the second member 322 illustrated at the right may be in a state of being exposed to the inside of the connection part 310.

One end of the second member 322 extending to the inside of the connection part 310 toward the electrode assembly 100 may be electrically connected to the electrode assembly 100. Here, the electrical connection may include both direct connection between the second member 322 and the electrode assembly 100 and indirect connection through another electrically conductive member.

When the second member 322 and the electrode assembly 100 are directly connected to each other, the electrode tab 110 of the electrode assembly 100 may be connected to the second member 322. In addition, when the second member 322 and the electrode assembly 100 are indirectly connected to each other, the secondary battery 10 may include a busbar 400 as an example of an electrically conductive member serving as a medium.

The busbar 400 may be disposed between the terminal part 320 and the electrode assembly 100 to connect one end of the second member 322 exposed to the inside of the connection part 310 to the electrode assembly 100. The busbar 400 may be made of a metal to have electrical conductivity. In addition, the busbar 400 may be disposed in various shapes depending on a length of the second member 322, etc. FIG. 3 is a view illustrating a case in which the busbar 400 has an approximate plate or bar shape according to Embodiment 1 of the present invention.

According to a modified example of Embodiment 1 of the present invention, the second members 322 may be provided so that one end toward the electrode assembly 100 is exposed to the inside of the connection part 310. Specifically, all of the plurality of second members 322 extending from the first member 321 toward the electrode assembly 100 may be exposed to the inside of the connection part 310.

As described above, when the second member 322 and the electrode assembly 100 are directly connected to each other, the electrode tab 110 of the electrode assembly 100 may be connected to the second member 322. In addition, when the second member 322 and the electrode assembly 100 are indirectly connected to each other, the secondary battery 10 may include a plurality of busbars 400 as an example of an electrically conductive member serving as a medium.

Referring to FIG. 4, each of the plurality of busbars 400 of the secondary battery 10 according to the modified example may be connected to the second member 322 inside the connection part 310. In this case, the electrode assembly 100 may be electrically connected to the second member 322 at a plurality of positions. Thus, when the secondary battery 10 includes a plurality of electrode assemblies 100, the plurality of electrode assemblies 100 may be electrically connected to the busbars 400 disposed at close positions. As a result, the secondary battery 10 may be improved efficiently in battery capacity.

The cap 300 according to Embodiment 1 of the present invention may be disposed so that one surface of the terminal part 320 protrudes from one surface of the connection part 310 in a direction away from the electrode assembly 100. Specifically, one surface of the first member 321 may be disposed to protrude outward from the connection part 310 more than one surface of the connection part 310. Based on FIGS. 3 or 4, each of one surface of the first member 321 and one surface of the connection part 310 may be referred to as a top surface. In this case, it may be easy to allow an object to obtain electrical energy to be in contact the protruding first member 321.

As another example related to the arrangement of the first member 321, one surface of the first member 321 may be disposed on the same surface as one surface of the connection part 310. In this case, since there is no portion of the first member 321 that protrudes to the outside of the connection part 310, an arrangement of a plurality of secondary batteries 10 may be easy.

In the cap 300 of the secondary battery 10 according to Embodiment 1 of the present invention, the connection part 310 and the terminal part 320 of which at least a portion is embedded in the connection part 310 may cover the electrode assembly 100. Depending on the material of the connection part 310, moisture on the outside of the connection part 310 may be permeated into the connection part 310 through the connection part 310. The permeation of the moisture may cause defects in the secondary battery 10. In the cap 300 of the secondary battery 10 according to Embodiment 1 of the present invention, the terminal part 320 made of a metal together with the connection part 310 may cover the electrode assembly 100, and thus, an area of the connection part 310 through which the moisture is permeated may be reduced. In addition, since at least a portion of the terminal part 320 is disposed in a shape of being embedded in the connection part 310, a moisture permeation path provided between the terminal part 320 and the connection part 310 may be difficult for moisture to be permeated. Thus, the secondary battery 10 according to Embodiment 1 of the present invention may reduce an amount of moisture permeated into the interior to reduce a limitation in performance of the secondary battery 10.

In addition, the cap 300 of the secondary battery 10 according to Embodiment 1 of the present invention may be disposed in a state in which the second member 322 of the terminal part 320 is embedded in the connection part 310. Thus, since the connection part 310 restricts movement of the terminal part 320 to prevent the terminal part 320 from being separated, the structural stability of the secondary battery 10 may be improved.

Although not described in detail in Embodiment 1 of the present invention, the cap 300 may further include a gas discharge member (not shown) that discharges a gas inside the secondary battery 10 or a venting member (not shown) that induces venting in a specific direction.

### Embodiment 2

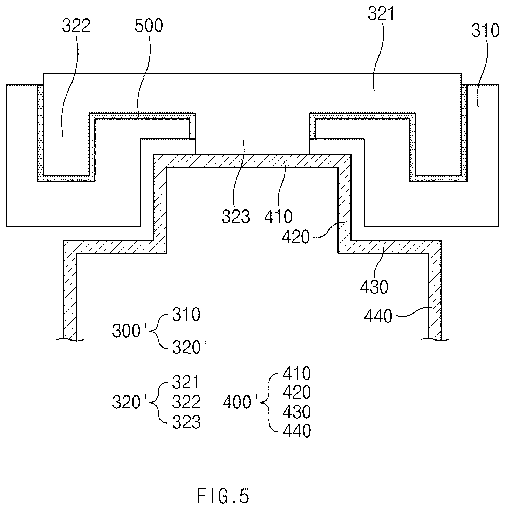

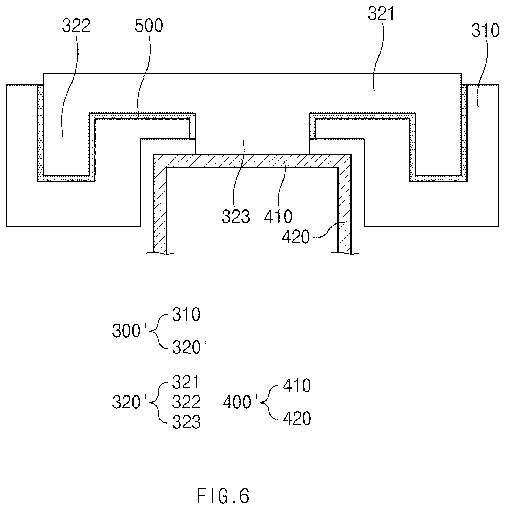

FIG. 5 is a schematic cross-sectional view illustrating a cap 300' and a busbar 400' of a secondary battery 10 according to Embodiment 2 of the present invention, and FIG. 6 is a schematic cross-sectional view illustrating a modified example of the cap 300' of FIG. 5.

Hereinafter, a detailed description of the same configuration as that of the second battery 10 according to Embodiment 1 of the present invention will be omitted, and the description will focus on the differences. The secondary battery 10 according to Embodiment 2 of the present invention may be different from the secondary battery 10 according to Embodiment 1 in a shape of a terminal part 320', a shape of the busbar 400', and a coupling method of the configurations.

The secondary battery 10 according to Embodiment 2 of the present invention may include an electrode assembly 100, an exterior film 200, and the cap 300'. The exterior film 200 of the secondary battery 10 may be provided to surround a portion of the electrode assembly 100. Specifically, the exterior film 200 may be provided to surround the cap 300' and the electrode assembly 100. More specifically, the exterior film 200 may be coupled to the cap 300 to define an internal space, and the electrode assembly 100 may be accommodated in the internal space.

The cap 300' of the secondary battery 10 may include a connection part 310 and a terminal part 320'. The connection part 310 of the cap 300' may be coupled to the exterior film 200, and the terminal part 320' of the cap 300' may be coupled to the connection part 310 so as to be exposed to each of the outside and inside of the connection part 310. Here, the inside of the connection part 310 may refer to a portion of the internal space defined by the cap 300' and the exterior film 200, and the outside of the connection part 310 may refer to an external space of the cap 300' and the exterior film 200. A a portion of the terminal part 320' exposed to the inside of the connection part 310 may be electrically connected to the electrode assembly 100.

As an example of a configuration for efficient electrical connection to the electrode assembly 100, the terminal part 320' of the cap 300' according to Embodiment 2 of the present invention may further include a third member 323.

Referring to FIG. 5, the third member 323 of the terminal part 320' may extend from a first member 321 toward the electrode assembly 100. Specifically, the third member 323 may be provided to pass through the connection part 310 so as to be exposed to the inside of the connection part 310. The third member 323 may have a shape extending toward the electrode assembly 100 from a center of a surface of the first member 321 facing the electrode assembly 100. The busbar 400' which will be described later, may be disposed in various shapes depending on a shape of the third member 323, and structural stability may be improved by increasing in contact area between the third member 323 and the busbar 400' .

Since the third member 323 is electrically connected to the electrode assembly 100, all of the second members 322 may be disposed to be embedded in the connection part 310. Here, the second member 322 may extend from a side portion of the first member 321 toward the electrode assembly 100. The second member 322 may be disposed along an edge of the first member 321. Since all of the second members 322 disposed along the edge of the first member 321 are disposed to be embedded in the connection part 310, the structural stability of the cap 300' may be improved. In this case, a path through which moisture is relatively difficult to be permeated may be provided between the connection part 310 and the terminal part 320 to effectively prevent moisture from being permeated into the interior of the secondary battery 10. This is only an example, and the second member 322 may be provided only on a pair of opposite edges of four edges of the first member 321, which has an approximately rectangular cross-section.

As an example of a configuration for electrically connecting the third member 323 to the electrode assembly 100, the secondary battery 10 according to Embodiment 2 of the present invention may further include a busbar 400'. Specifically, the busbar 400' may be disposed between the terminal part 320' and the electrode assembly 100 to connect the third member 323 exposed to the inside of the connection part 310 to the electrode assembly.

As an example of a configuration for efficient connection to the third member 323, the busbar 400' according to Embodiment 2 of the present invention may include a first metal part 410, a second metal part 420, a third metal part 430, and a fourth metal part 440.

Referring to FIG. 5, the first metal part 410 may be in contact with the third member 323. For example, the first metal part 410 may have a substantially plate shape and may extend parallel to a direction in which the first member 321 extends. In addition, the first metal part 410 may be disposed so that a surface facing the third member 323 is in contact with the third member 323. Here, the third member 323 may include a metal material, and the third member 323 and the first metal portion 410 may be coupled to each other through welding.

The second metal part 420 may extend from the first metal part 410 toward the electrode assembly 100. Here, the second metal part 420 may extend in a direction substantially perpendicular to the direction in which the first metal part 410 extends.

The third metal part 430 may extend from the second metal part 420 toward the exterior film 200. Here, the third metal part 430 may extend in a direction substantially perpendicular to a direction in which the second metal part 420 extends. Specifically, the third metal part 430 may extend in a direction away from the third member 323.

The fourth metal part 440 may extend from the third metal part 430 toward the electrode assembly 100. In addition, one end of the fourth metal part 440 may be connected to the electrode assembly 100. Specifically, one end of the fourth metal part 440 may be connected to the electrode tab 110 of the electrode assembly 100.

The busbar 400' including the first metal part 410, the second metal part 420, the third metal part 430, and the fourth metal part 440 may be changed in various shapes depending on the number, arrangement, shape, etc. of the electrode assembly 100.

Referring to FIG. 6, a busbar 400' according to a modified example of Embodiment 2 of the present invention may be constituted by a first metal part 410 and a second metal part 420. Here, one end of the second metal part 420 may be connected to the electrode assembly 100. In this case, the busbar 400' may be disposed in a space defined inside the connection part 310 by the connection part 310. Thus, when the electrode assembly 100 is disposed, space efficiency may be improved, and battery capacity may be improved.

An adhesive 500 may be used as a component for coupling between the connection part 310 and the terminal part 320'. That is, the connection part 310 and the terminal part 320' may be coupled to each other by the adhesive 500 applied between the connection part 310 and the terminal part 320'. In addition, the connection part 310 and the exterior film 200 may also be coupled to each other through the adhesive 500 applied between the connection part 310 and the exterior film 200. Here, the type and application form of the adhesive 500 for coupling may vary. The adhesive 500 may be made of a material with relatively high hydrophobicity.

### Embodiment 3

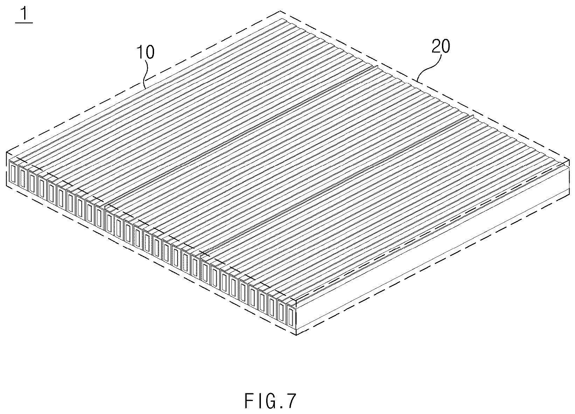

FIG. 7 is a schematic exploded perspective view of a battery pack 1 according to Embodiment 3 of the present invention.

The battery pack 1 according to Embodiment 3 of the present invention may include a plurality of secondary batteries 10. In addition, the battery pack 1 may include a packaging 20 that accommodates the plurality of secondary batteries 10 therein.

The packaging 20 may have various shape. For example, the packaging 20 may include a busbar electrically connected to the plurality of secondary batteries 10. Here, the packaging 20 may further include a busbar frame that fixes the bus bar.

The number of secondary batteries 10 accommodated inside the packaging 20 may vary depending on the battery pack 1.

While the present invention has been shown and described in connection with the exemplary embodiments, it will be apparent to those skilled in the art that modifications and variations can be made without departing from the spirit and scope of the invention as defined by the appended claims.

### [List of Reference Numerals]

1: battery pack
10: secondary battery
20: packaging
100: electrode assembly
200: exterior film
300, 300': cap
310: connection part
320, 320': terminal part
321: first member
322: second member
323: third member
330: cover part
400, 400': bus bar
410: first metal part
420: second metal part
430: third metal part
440: fourth metal part
500: adhesive

## Claims

1. A secondary battery comprising:
an electrode assembly;
an exterior film configured to surround a portion of the electrode assembly; and
a cap configured to cover a remaining portion of the electrode assembly,
wherein the cap comprises:
a connection part coupled to the exterior film; and
a terminal part coupled to the connection part, exposed to each of the inside and outside of the connection part, and electrically connected to the electrode assembly at a portion thereof, which is exposed to the inside of the connection part,
wherein at least a portion of the terminal part is embedded into the connection part.

2. The secondary battery of claim 1, wherein the terminal part comprises:
a first member exposed to the outside of the connection part; and
a second member extending from the first member toward the electrode assembly.

3. The secondary battery of claim 2, wherein the second member is provided so that one end toward the electrode assembly is exposed to the inside of the connection part.

4. The secondary battery of claim 3, further comprising a busbar disposed between the terminal part and the electrode assembly to connect one end of the second member, which is exposed to the inside of the connection part, to the electrode assembly.

5. The secondary battery of claim 2, wherein the second member extends from a side portion of the first member toward the electrode assembly and is embedded into the connection part so as to be covered by the connection part, and
the terminal part further comprises a third member extending from the first member toward the electrode assembly and provided to pass through the connection part so as to be exposed to the inside of the connection part.

6. The secondary battery of claim 5, further comprising a busbar disposed between the terminal part and the electrode assembly to connect the third member, which is exposed to the inside of the connection part, to the electrode assembly.

7. The secondary battery of claim 6, wherein the busbar comprises:
a first metal part that is in contact with the third member; and
a second metal part which extends from the first metal part toward the electrode assembly and of which one end is connected to the electrode assembly.

8. The secondary battery of claim 6, wherein the busbar comprises:
a first metal part that is in contact with the third member;
a second metal part extending from the first metal part toward the electrode assembly;
a third metal part extending from the second metal part toward the exterior film; and
a fourth metal part which extends from the third metal part toward the electrode assembly and of which one end is connected to the electrode assembly.

9. The secondary battery of claim 6, wherein the third member comprises a metal material, and
the third member and the busbar are coupled to each other by welding.

10. The secondary battery of claim 1, wherein the terminal part is disposed to protrude in a direction, which is away from the electrode assembly, from one surface of the connection part.

11. The secondary battery of claim 1, wherein, in the cap, one surface of the connection part is disposed on the same surface as one surface of the terminal part.

12. The secondary battery of claim 1, wherein the terminal part comprises a metal material,
the connection part comprises a resin material having adhesive properties by heat, and
the terminal part and the connection part are coupled to each other by heat and a pressure.

13. The secondary battery of claim 1, wherein the connection part and the terminal part are coupled to each other by an adhesive applied between the connection part and the terminal part.

14. The secondary battery of claim 1, wherein the connection part comprises a metal material, and
the exterior film comprises a metal layer coupled to the connection part by welding.

15. The secondary battery of claim 1, wherein the exterior film comprises a sealant layer having adhesive properties by heat and a barrier layer comprising a metal,
wherein the barrier layer comprises one or more materials selected from the group consisting of iron (Fe), carbon (C), chromium (Cr), manganese (Mn), nickel (Ni), aluminum (Al), stainless steel (STS), and an alloy thereof.

16. The secondary battery of claim 1, wherein the connection part comprises a resin material having adhesive properties by heat, and
the exterior film comprises a resin layer coupled to the connection part by heat and a pressure.

17. The secondary battery of claim 1, wherein the exterior film and the connection part are coupled to each other by an adhesive applied between the exterior film and the connection part.

18. The secondary battery of claim 1, wherein the exterior film comprises a bendable film.

19. The secondary battery of claim 1, wherein the exterior film comprises a bendable film having no elasticity.

20. A method for preparing a secondary battery, the method comprising:
providing an electrode assembly comprising a positive electrode and a negative electrode;
allowing an exterior film to surround a portion of the electrode assembly; and
allowing a cap to cover a remaining portion of the electrode assembly,
wherein the cap comprises:
a connection part coupled to the exterior film; and
a terminal part coupled to the connection part, exposed to each of the inside and outside of the connection part, and electrically connected to the electrode assembly at a portion of the inside of the connection part,
wherein at least a portion of the terminal part is embedded into the connection part.

21. A battery pack comprising:
the secondary battery of claim 1, which is provided in plurality; and
a packaging configured to accommodate the plurality of secondary batteries.
